# EUROPÄISCHE PATENTANMELDUNG

(11) **EP 1 672 483 A1**
(43) Veröffentlichungstag der Anmeldung: **21.06.2006**
(21) Anmeldenummer: 04030186.3
(22) Anmeldetag: 20.12.2004
(51) Int. Cl.: G06F 9/44, G06Q 10/00, G06F 3/033, G06F 3/023

(54) **Erfassung von Daten in einem Datenverarbeitungssystem**

(71) Anmelder: SIEMENS AKTIENGESELLSCHAFT, 80333 München (DE)
(72) Erfinder: Fritz, Helmut, 90453 Nürnberg (DE)

(57) **Zusammenfassung**

Die Erfindung betrifft ein Verfahren sowie ein System zur Erfassung von Daten (12-15) in einem Datenverarbeitungssystem (1). Dabei werden die Daten (12-15) in mehreren Schritten (2-5) erfasst, wobei zu einem Schritt (2-5) in einem Darstellungsbereich (19) eines Anzeigemittels (6) jeweils eine Sicht (16-18) dargestellt wird, wobei die Erfassung und/oder Darstellung bei nachfolgenden Schritten (2-5) zumindest teilweise von den in einem oder mehreren vorhergehenden Schritten (2-5) erfassten Daten (12-15) abhängig erfolgt. Um die schrittweise Erfassung der Daten anwenderfreundlicher zu gestalten, wird vorgeschlagen, dass die Sichten (16-18) von mehreren aufeinanderfolgenden Schritten (2-5) gleichzeitig in dem Darstellungsbereich (19) dargestellt werden.

## Beschreibung

Die Erfindung betrifft ein Verfahren sowie ein System zur Erfassung von Daten in einem Datenverarbeitungssystem, und ein Computerprogrammprodukt zur Durchführung des Verfahrens. Dabei werden Daten in mehreren Schritten erfasst, wobei zu einem Schritt in einem Darstellungsbereich eines Anzeigemittels jeweils eine Sicht dargestellt wird und wobei die Erfassung und/oder Darstellung bei nachfolgenden Schritten zumindest teilweise von den in einem oder mehreren vorhergehenden Schritten erfassten Daten abhängig erfolgt.

Ein solches Verfahren bzw. System zur Erfassung von Daten wird üblicherweise auch Wizard genannt. Dabei führt ein Wizard den Benutzer durch eine Abarbeitung von einzelnen Schritten durch ein komplexes Problem. Ein Wizard zeigt dabei nur den aktuellen Bearbeitungsschritt an. Ein Benutzer kann bei einem Wizard üblicherweise zu bereits bearbeiteten Schritten zurückgehen, muss dann aber unter Umständen die folgenden Schritte noch mal eingeben. Die EP 1 437 648 A2 beschreibt ein System zur Entwicklung und Ausführung von Wizards.

Der Erfindung liegt die Aufgabe zugrunde, die schrittweise Erfassung von Daten in einem Datenverarbeitungssystem anwenderfreundlicher zu gestalten.

Diese Aufgabe wird durch ein Verfahren zur Erfassung von Daten in einem Datenverarbeitungssystem gemäß Patentanspruch 1 gelöst. Dabei werden die Daten in mehreren Schritten erfasst, wobei zu einem Schritt in einem Darstellungsbereich eines Anzeigemittels jeweils eine Sicht dargestellt, wobei die Erfassung und/oder Darstellung bei nachfolgenden Schritten zumindest teilweise von den in einem oder mehreren vorhergehenden Schritten erfassten Daten abhängig erfolgt, wobei die Sichten von mehreren aufeinander folgenden Schritten gleichzeitig in dem Darstellungsbereich dargestellt werden.

Diese Aufgabe wird durch ein System zur Erfassung von Daten in einem Datenverarbeitungssystem nach Anspruch 8 gelöst. Dabei sind die Daten in mehreren Schritten erfassbar, wobei ein Anzeigemittel mit einem Darstellungsbereich zur Darstellung jeweils einer Sicht zu einem Schritt vorgesehen ist, wobei Daten bzw. Sichten von nachfolgenden Schritten zumindest teilweise von den in einem oder mehreren vorhergehenden Schritten erfassten Daten abhängig erfassbar und/oder darstellbar sind, wobei die Sichten von mehreren aufeinander folgenden Schritten gleichzeitig in dem Darstellungsbereich darstellbar sind.

Diese Aufgabe wird ferner durch ein Computerprogrammprodukt zur Durchführung des oben genannten Verfahrens gelöst.

Bei bisher bekannten Verfahren zur Erfassung von Daten in einem Datenverarbeitungssystem, insbesondere bei Wizardbasierten Verfahren, hat ein Benutzer keine Möglichkeit, sich Entscheidungen, die er in einem vorhergehenden Schritt getroffen hat, anzusehen, ohne zumindest den aktuell bearbeiteten Schritt zu verlassen. Die Erfindung ermöglicht hingegen auf komfortable Art und Weise den Überblick auch über alle in vorhergehenden Schritten eingegebenen Daten bzw. Entscheidungen. Der Benutzer kann sich somit die vorhergehenden Schritte ansehen, ohne die Bearbeitung des aktuellen Schritts abzubrechen. Er kann eventuell noch Einstellungen in vorhergehenden Schritten verändern. Zudem kann sich der Benutzer schnell einen Überblick über alle Schritte und die in diesen Schritten eingegebenen Daten bzw. Entscheidungen verschaffen, da die Sichten von mehreren aufeinander folgenden Schritten erfindungsgemäß gleichzeitig in einem Darstellungsbereich dargestellt werden, und somit gleichzeitig für den Benutzer sichtbar sind.

Gemäß einer vorteilhaften Ausgestaltung der Erfindung werden die in einem Schritt erfassten Daten nach dem jeweiligen Schritt im Datenverarbeitungssystem verarbeitet. Durch die damit erfolgende schrittweise Verarbeitung der Daten wird eine Anpassung der Sichten von nachfolgenden Schritten an die in vorhergehenden Schritten jeweils eingegebenen Daten ermöglicht.

Um die Bearbeitung der Daten flexibler zu gestalten, wird gemäß einer weiteren vorteilhaften Ausgestaltung der Erfindung vorgeschlagen, dass eine Anordnung der Sichten innerhalb des Darstellungsbereichs verändert wird, wobei ein Teil der Sichten zumindest zeitweise ausgeblendet wird.

Eine Darstellung der Sichten entsprechend der Reihenfolge der Schritte erfolgt vorteilhafterweise derart, dass die Sichten im Darstellungsbereich nebeneinander, insbesondere vertikal oder horizontal nebeneinander, angeordnet sind.

Um die Schritte eindeutig voneinander abzugrenzen, wird gemäß einer weiteren vorteilhaften Ausgestaltung der Erfindung vorgeschlagen, dass ein Schritt durch Navigationsmittel gestartet und/oder beendet wird.

Gemäß einer weiteren besonders vorteilhaften Ausgestaltung der Erfindung sind vorhergehende Schritte bearbeitbar. Dabei sind insbesondere Daten in vorhergehenden Schritten bearbeitbar, welche nachfolgende Schritte nicht beeinflussen, z. B. kann nachträglich die in einem vorhergehenden Schritt eingegebene Anschrift geändert werden. Werden Daten in einem vorhergehenden Schritt geändert bzw. bearbeitet, welche nachfolgende Schritte beeinflussen, so reagiert das System vorteilhafterweise derart, dass die gegebenenfalls erforderliche Bearbeitung der nachfolgenden Schritte vom Benutzer erneut eingefordert bzw. ermöglicht wird.

Nachfolgend wird die Erfindung anhand der in den Figuren dargestellten Ausführungsbeispiele näher beschrieben und erläutert.

Es zeigen:
- FIG 1: ein System zur Erfassung von Daten in einem Datenverarbeitungssystem,
- FIG 2: eine schematische Darstellung eines Ausführungsbeispiels der Erfindung,
- FIG 3 - 5: die Darstellung von Sichten von mehreren jeweils aufeinander folgenden Schritten in einem Darstellungsbereich.

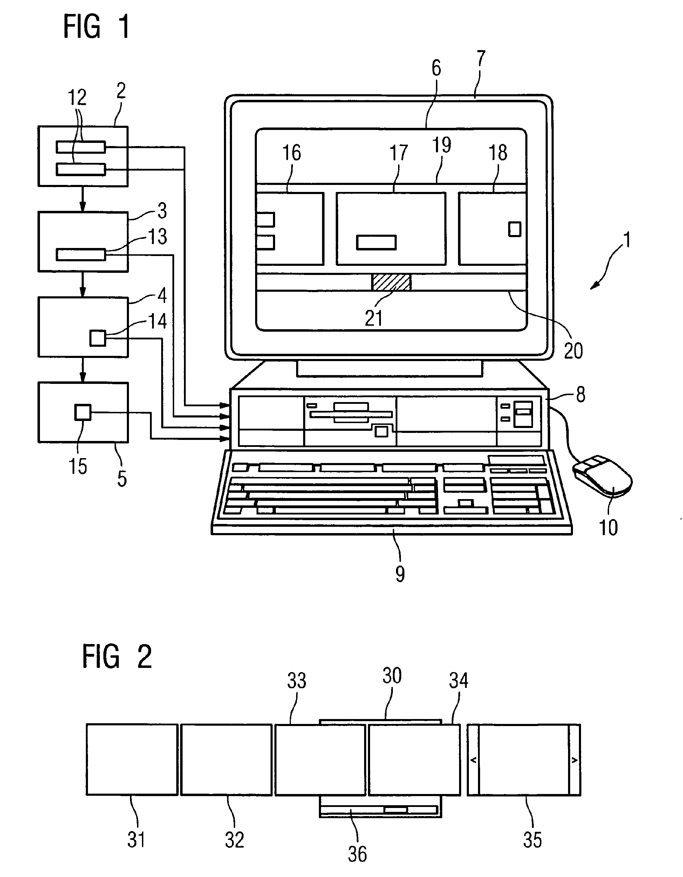

FIG 1 zeigt ein Ausführungsbeispiel eines Systems zur Erfassung von Daten 12-15 in einem Datenverarbeitungssystem 1. Die Daten 12-15 sind in mehreren Schritten 2-5 erfassbar, wie in FIG 1 schematisch angedeutet. Die Schritte 2-5 folgen aufeinander. Das Datenverarbeitungssystem 1 weist einen Rechner 8, Eingabemittel 9, 10 sowie ein Anzeigemittel 6, in diesem Fall ein Bildschirm eines Monitors 7, auf. Die Daten 12-15 können durch einen Benutzer schrittweise in das Datenverarbeitungssystem 1 bzw. den Rechner 8 eingegeben werden. Der Benutzer des Systems wird dabei durch die Darstellung jeweils einer Sicht 16, 17, 18 zu einem Schritt 2, 3, 4 unterstützt. Gemäß dem dargestellten Ausführungsbeispiel der Erfindung werden die Sichten 16, 17, 18 von mehreren aufeinander folgenden Schritten 2, 3, 4 zumindest teilweise gleichzeitig in dem Darstellungsbereich 19 dargestellt. Die Auswahl der jeweils dargestellten Sichten bzw. Schritte wird unterstützt durch die Anzeige einer Bildlaufleiste 20 mit einem Balken 21 zur Angabe der aktuellen Position innerhalb der dargestellten Bearbeitungsschritte.

In FIG 2 sind wiederum mehrere Bearbeitungsschritte 31-35 eines Eingabeprozesses symbolisch dargestellt. Dabei sind in dem Darstellungsbereich 30 bei dem gezeigten Zustand des Systems nur die Schritte 33 und 34 teilweise sichtbar. Die Anordnung der Sichten innerhalb des Darstellungsbereiches 30 kann durch entsprechende Verwendung der Bildlaufleiste 36 (auch Scrollbar genannt) verändert werden. Im Gegensatz zu einem herkömmlichen Wizard, der alle Bearbeitungsseiten sozusagen aufeinander stapelt und bei dem nur die oberste Seite zu sehen ist, werden gemäß dem Ausführungsbeispiel der Erfindung die Bearbeitungsseiten vertikal oder horizontal nebeneinander angeordnet. Der Darstellungsbereich, z. B. ein Fenster, hat nun einen Scrollbar (horizontal/vertikal) mit dem über alle bisherigen/aktuellen Schritte gescrollt werden kann um sich diese Schritte anzusehen.

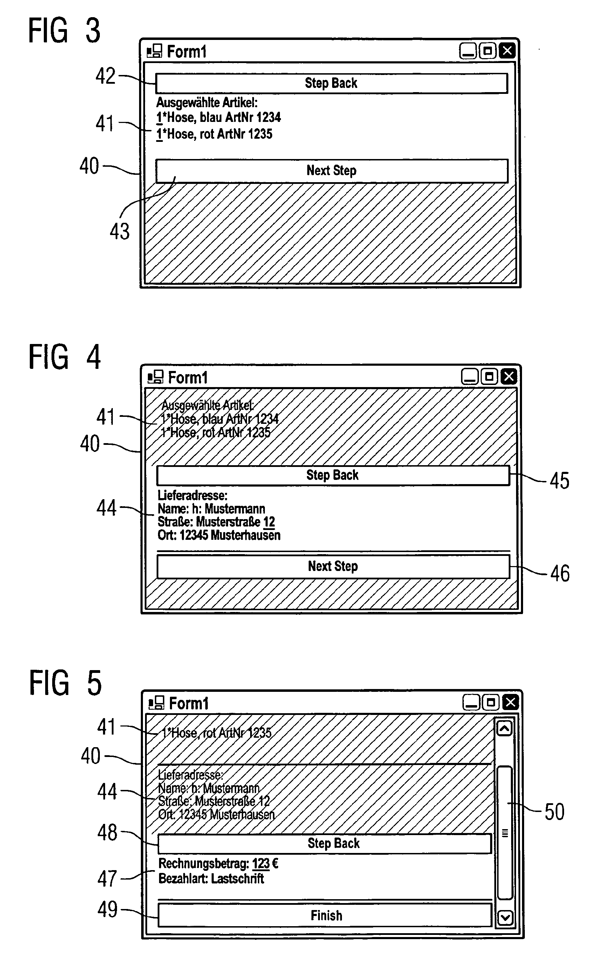

FIG 3 bis FIG 5 zeigen jeweils den Darstellungsbereich 40 zur Darstellung der Sichten 41, 44, 47 von mehreren aufeinander folgenden Schritten innerhalb eines Verfahrens zur Erfassung von Daten. Gemäß der Darstellung von FIG 3 ist eine erste Sicht 41 eines ersten Bearbeitungsschrittes in dem Darstellungsbereich 40 dargestellt. Ein Anwender des Systems kann bestimmte diesem Bearbeitungsschritt zugeordnete Eingaben tätigen, welche von dem System erfasst werden. Mit Navigationsmitteln 42, 43 kann der Benutzer den jeweiligen Schritt starten, beenden oder einen Schritt zurückgehen. Gemäß Ausführungsbeispiel wird durch Aktivierung des Navigationsmittels 43 der aktuelle Schritt beendet, d. h. die während der Bearbeitung des jeweiligen Schrittes eingegebenen Daten gespeichert bzw. verarbeitet, und der nächste Schritt 44 aktiviert. Die letzte Seite, also die Sicht des letzten Schritts, ist also durch Navigationsschaltflächen eingerahmt, mit denen der Benutzer den letzten Schritt bearbeiten kann bzw. den nächsten Schritt aufruft.

Gemäß FIG 4 wird daraufhin der nächste Schritt 44, welcher jetzt der aktuelle Schritt ist, in dem aktiven Darstellungsbereich angezeigt. Der vorhergehende Schritt 41 bleibt jedoch in dem Darstellungsbereich 40 sichtbar. Auch zu dem jetzt aktuellen Arbeitsschritt 44 werden Navigationsmittel 45, 46 angezeigt, mit welchen ein Schritt zurückgegangen werden kann bzw. der aktuell bearbeitete Schritt beendet werden kann.

Entsprechend wird bei Aktivierung des nächsten Schrittes 47 dieser Schritt in dem aktiven Darstellungsbereich dargestellt, wohingegen die vorhergehenden Schritte 41 und 44 weiterhin zumindest teilweise sichtbar sind, aber zumindest momentan nicht bearbeitbar sind. Ein Teil der Sicht auf dem ersten Schritt 41 ist gemäß FIG 5 ausgeblendet, da der Darstellungsbereich 40 nur eine begrenzte Anzahl von Zeilen darstellen kann. Um dennoch sämtliche Informationen darstellen zu können, wird eine Bildlaufleiste 50 eingeblendet, mit welcher durch Verschiebung des dargestellten Inhalts die jeweilige Sicht ausgewählt werden kann.

Normalerweise ist nur die letzte Seite bearbeitbar und alle vorhergehenden sind nur lesbar. Aber abhängig von dem Umfeld wäre es auch möglich die vorhergehenden Seiten auch weiterhin editierbar zu lassen. Folgende Vorteile ergeben sich: Der Benutzer kann sich die vorhergehenden Schritte ansehen, ohne die Bearbeitung des aktuellen Schritts abzubrechen. Der Benutzer kann eventuell noch Einstellungen in vorhergehenden Schritten verändern und der Benutzer kann sich schnell einen Überblick über alle Schritte verschaffen, da u. U. auch mehrere Schritte gleichzeitig sichtbar sind.

Zusammengefasst betrifft die Erfindung somit ein Verfahren sowie ein System zur Erfassung von Daten 12-15 in einem Datenverarbeitungssystem 1. Dabei werden die Daten 12-15 in mehreren Schritten 2-5 erfasst, wobei zu einem Schritt 2-5 in einem Darstellungsbereich 19 eines Anzeigemittels 6 jeweils eine Sicht 16-18 dargestellt wird, wobei die Erfassung und/oder Darstellung bei nachfolgenden Schritten 2-5 zumindest teilweise von den in einem oder mehreren vorhergehenden Schritten 2-5 erfassten Daten 12-15 abhängig erfolgt. Um die schrittweise Erfassung der Daten anwenderfreundlicher zu gestalten, wird vorgeschlagen, dass die Sichten 16-18 von mehreren aufeinanderfolgenden Schritten 2-5 gleichzeitig in dem Darstellungsbereich 19 dargestellt werden.

## Patentansprüche

**1.** Verfahren zur Erfassung von Daten (12-15) in einem Datenverarbeitungssystem (1), bei welchem Verfahren die Daten (12-15) in mehreren Schritten (2-5) erfasst werden, wobei zu einem Schritt (2-5) in einem Darstellungsbereich (19) eines Anzeigemittels (6) jeweils eine Sicht (16-18) dargestellt wird, wobei die Erfassung und/oder Darstellung bei nachfolgenden Schritten (2-5) zumindest teilweise von den in einem oder mehreren vorhergehenden Schritten (2-5) erfassten Daten (12-15) abhängig erfolgt,
**dadurch gekennzeichnet ,**
**dass** die Sichten (16-18) von mehreren aufeinanderfolgenden Schritten (2-5) gleichzeitig in dem Darstellungsbereich (19) dargestellt werden.

**2.** Verfahren nach Anspruch 1,
**dadurch gekennzeichnet ,**
**dass** die in einem Schritt (2-5) erfassten Daten (12-15) nach dem jeweiligen Schritt (2-5) im Datenverarbeitungssystem (1) verarbeitet werden.

**3.** Verfahren nach Anspruch 1 oder 2,
**dadurch gekennzeichnet ,**
**dass** eine Anordnung der Sichten (16-18) innerhalb des Darstellungsbereichs (19) verändert wird, wobei ein Teil der Sichten (16-18) zumindest zeitweise ausgeblendet wird.

**5.** Verfahren nach einem der vorhergehenden Ansprüche,
**dadurch gekennzeichnet ,**
**dass** die Sichten (16-18) im Darstellungsbereich (19) nebeneinander, insbesondere vertikal oder horizontal nebeneinander, angeordnet sind.

**6.** Verfahren nach einem der vorhergehenden Ansprüche,
**dadurch gekennzeichnet ,**
**dass** ein Schritt (2-5) durch Navigationsmittel (45, 46) gestartet und/oder beendet wird.

**7.** Verfahren nach einem der vorhergehenden Ansprüche,
**dadurch gekennzeichnet ,**
**dass** vorhergehende Schritte (2-5) bearbeitbar sind.

**8.** System zur Erfassung von Daten (12-15) in einem Datenverarbeitungssystem (1), wobei die Daten (12-15) in mehreren Schritten (2-5) erfassbar sind, wobei ein Anzeigemittel (6) mit einem Darstellungsbereich (19) zur Darstellung jeweils einer Sicht (16-18) zu einem Schritt (2-5) vorgesehen ist, wobei Daten (12-15) bzw. Sichten (16-18) von nachfolgenden Schritten (2-5) zumindest teilweise von den in einem oder mehreren vorhergehenden Schritten (2-5) erfassten Daten abhängig erfassbar und/oder darstellbar sind,
**dadurch gekennzeichnet ,**
**dass** die Sichten (16-18) von mehreren aufeinander folgenden Schritten (2-5) gleichzeitig in dem Darstellungsbereich (19) darstellbar sind.

**9.** System nach Anspruch 8,
**dadurch gekennzeichnet ,**
**dass** das Datenverarbeitungssystem (1) zur Verarbeitung der in einem Schritt (2-5) erfassten Daten nach dem jeweiligen Schritt (2-5) vorgesehen ist.

**10.** System nach Anspruch 8 oder 9,
**dadurch gekennzeichnet ,**
**dass** Mittel (36) zur Verschiebung der Sichten (16-18) innerhalb des Darstellungsbereichs (19) vorgesehen sind.

**11.** System nach einem der Ansprüche 8 bis 10,
**dadurch gekennzeichnet ,**
**dass** eine Anordnung der Sichten (16-18) innerhalb des Darstellungsbereichs (19) veränderbar ist, wobei ein Teil der Sichten (16-18) zumindest zeitweise ausblendbar ist.

**12.** System nach einem der Ansprüche 8 bis 11,
**dadurch gekennzeichnet ,**
**dass** die Sichten (16-18) im Darstellungsbereich (19) vertikal oder horizontal nebeneinander angeordnet sind.

**13.** System nach einem der Ansprüche 8 bis 12,
**dadurch gekennzeichnet ,**
**dass** Navigationsmittel (45, 46) zum Starten und/oder Beenden eines Schritts (2-5) vorgesehen sind.

**14.** System nach einem der Ansprüche 8 bis 13,
**dadurch gekennzeichnet ,**
**dass** vorhergehende Schritte (2-5) bearbeitbar sind.

**15.** Computerprogrammprodukt zur Durchführung eines Verfahrens zur Erfassung von Daten (12-15) in einem Datenverarbeitungssystem (1), bei welchem Verfahren die Daten (12-15) in mehreren Schritten (2-5) erfasst werden, wobei zu einem Schritt (2-5) in einem Darstellungsbereich (19) eines Anzeigemittels (6) jeweils eine Sicht (16-18) dargestellt wird, wobei die Erfassung und/oder Darstellung bei nachfolgenden Schritten (2-5) zumindest teilweise von den in einem oder mehreren vorhergehenden Schritten (2-5) erfassten Daten (12-15) abhängig erfolgt,
**dadurch gekennzeichnet ,**
**dass** die Sichten (16-18) von mehreren aufeinander folgenden Schritten (2-5) gleichzeitig in dem Darstellungsbereich (19) dargestellt werden.
